(19) Europäisches Patentamt
European Patent Office
Office européen des brevets

(11) EP 3 103 828 B1

(12) EUROPEAN PATENT SPECIFICATION

(45) Date of publication and mention of the grant of the patent:
**04.07.2018 Bulletin 2018/27**

(21) Application number: **15745993.4**

(22) Date of filing: **06.02.2015**

(51) Int Cl.:
*C09D 153/02* (2006.01) *C08J 3/09* (2006.01)
*C09D 5/02* (2006.01) *C09D 7/40* (2018.01)

(86) International application number:
**PCT/JP2015/053389**

(87) International publication number:
**WO 2015/119248 (13.08.2015 Gazette 2015/32)**

(54) **AQUEOUS EMULSION, THIN MOLDED ARTICLE, AND METHOD FOR PRODUCING THIN MOLDED ARTICLE**

WÄSSRIGE EMULSION, DÜNNER GEFORMTER ARTIKEL UND VERFAHREN ZUR HERSTELLUNG EINES DÜNNEN GEFORMTEN ARTIKELS

ÉMULSION AQUEUSE, ARTICLE MOULÉ MINCE, ET PROCÉDÉ DE PRODUCTION D'ARTICLE MOULÉ MINCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2014 JP 2014022194**

(43) Date of publication of application:
**14.12.2016 Bulletin 2016/50**

(73) Proprietors:
- **Kuraray Co., Ltd.**
  **Kurashiki-shi, Okayama 710-0801 (JP)**
- **Amyris, Inc.**
  **Emeryville, CA 94608 (US)**

(72) Inventor: **SASAKI, Hiromitsu**
**Kamisu-shi**
**Ibaraki 314-0197 (JP)**

(74) Representative: **Müller-Boré & Partner**
**Patentanwälte PartG mbB**
**Friedenheimer Brücke 21**
**80639 München (DE)**

(56) References cited:
**WO-A1-2013/126129**
**WO-A1-2013/183570**
**JP-A- 2006 316 211**
**JP-A- 2007 063 508**
**JP-A- 2012 502 136**
**US-A1- 2012 165 474**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 103 828 B1

**Description**

Technical Field

The present invention relates to an aqueous emulsion containing a block copolymer constituted of a polymer block composed of a structural unit derived from an aromatic vinyl compound and a polymer block including a structural unit derived from farnesene, a thin molded article using the same, and a method for producing a thin molded article.

Background Art

For the purpose of imparting properties, such as corrosion resistance, scratch resistance, wear resistance, mechanical properties, weather resistance, heat resistance, hydrolysis resistance, etc., to a surface of a substrate, there has hitherto been adopted a method of forming a coating film composed of a resin material and the like. In general, the aforementioned coating film is produced by coating a mixed liquid obtained by dissolving a resin material in an organic solvent on a substrate, followed by drying.

However, in this production method, there is caused such a problem that the organic solvent volatilizes at the time of drying, thereby deteriorating the working environment, and a so-called "solvent-free" method that is an embodiment not using an organic solvent is investigated.

Examples of a specific measure of the solvent-free method include a method of converting a resin material to an aqueous emulsion thereof. For example, PTLs 1 and 2 describe a method of converting a resin material to an aqueous emulsion thereof by using a surfactant or a protective colloid.

Citation List

Patent Literature

PTL 1: JP 8-120025A
PTL 2: JP 2006-316211A

Summary of Invention

Technical Problem

According to the conventional aqueous emulsions, coating properties on a substrate, impregnation properties in a body to be impregnated, and corrosion resistance of the resulting thin molded article were good, and mechanical properties, such as flexibility, rubber elasticity, etc., were exhibited to some extent of performances. However, further improvements regarding the respective properties have been desired.

A problem of the present invention is to provide an aqueous emulsion that is good in coating properties on a substrate or impregnation properties in a body to be impregnated and capable of giving a thin molded article having excellent corrosion resistance and mechanical properties, a thin molded article composed of the aqueous emulsion, and a method for producing a thin molded article.

Solution to Problem

In order to solve the foregoing problem, the present inventor made extensive and intensive investigations. As a result, it has been found that an aqueous emulsion with high stability is obtained by using a specified block copolymer and a protective colloid in combination; and that a thin molded article composed of such an aqueous emulsion is provided with the aforementioned respective properties at high levels, thereby leading to accomplishment of the present invention.

Specifically, the present invention has the gist of the following [1] to [4].

[1] An aqueous emulsion including a block copolymer (I) containing a polymer block (a) composed of a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, with a mass ratio [(a)/(b)] of the polymer block (a) and the polymer block (b) being 5/95 to 70/30; a protective colloid (II); and water, a content of the protective colloid (II) being 3 to 35 parts by mass based on 100 parts by mass of the block copolymer (I).

[2] A thin molded article obtained from the aqueous emulsion as set forth above in [1].

[3] A method for producing a thin molded article including a step of coating a substrate with the aqueous emulsion as set forth above in [1] to form a coating film; and a step of drying the coating film.

[4] A method for producing a thin molded article including a step of impregnating a body to be impregnated with the aqueous emulsion as set forth above in [1] to obtain an impregnated body; and a step of drying the impregnated body.

Advantageous Effects of Invention

In accordance with the present invention, it is possible to provide an aqueous emulsion that is good in coating properties on a substrate or impregnation properties in a body to be impregnated and capable of giving a thin molded article having excellent corrosion resistance and mechanical properties, a thin molded article composed of the aqueous emulsion, and a method for producing a thin molded article.

Description of Embodiments

[1] Aqueous Emulsion

The aqueous emulsion of the present invention is an aqueous emulsion including a block copolymer (I) containing a polymer block (a) composed of a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, with a mass ratio [(a)/(b)] of the polymer block (a) and the polymer block (b) being 5/95 to 70/30; a protective colloid (II); and water, a content of the protective colloid (II) being 3 to 35 parts by mass based on 100 parts by mass of the block copolymer (I).

[Block Copolymer (I)]

The block copolymer (I) that is used in the present invention is a block copolymer containing a polymer block (a) composed of a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, with a mass ratio [(a)/(b)] of the polymer block (a) and the polymer block (b) being 5/95 to 70/30.

The polymer block (a) is constituted of a structural unit derived from an aromatic vinyl compound. Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, divinylbenzene, and the like. These aromatic vinyl compounds may be used alone or in combination of any two or more thereof. Above all, styrene, α-methylstyrene, and 4-methylstyrene are more preferred, and styrene is still more preferred.

The polymer block (b) contains 1 to 100% by mass of the structural unit (b1) derived from farnesene and contains 99 to 0% by mass of the structural unit (b2) derived from a conjugated diene other than farnesene. When the content of the structural unit (b1) derived from farnesene is less than 1% by mass, the coating properties or impregnation properties of the aqueous emulsion are deteriorated, and the corrosion resistance and flexibility of the resulting thin molded article are deteriorated. Although the structural unit (b1) may be a structural unit derived from α-farnesene or β-farnesene represented by the following formula (I), the structural unit (b1) is preferably a structural unit derived from β-farnesene from the viewpoint of facilitating production of the block copolymer (I). α-farnesene and β-farnesene may be used in combination.

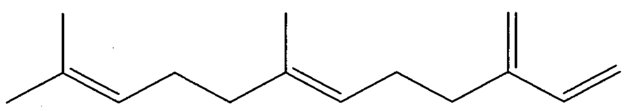
(I)

Examples of the conjugated diene constituting the structural unit (b2) derived from a conjugated diene other than farnesene include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, chloroprene, and the like. These conjugated dienes may be used alone or in combination of any two or more thereof. Above all, isoprene, butadiene, and myrcene are more preferred, and isoprene and/or butadiene are/is still more preferred.

Furthermore, the polymer block (b) may contain, in addition to the structural unit (b1) derived from farnesene and the structural unit (b2) derived from a conjugated diene other than farnesene, a small amount of a structural unit derived from other copolymerizable monomer within the range where the effects of the present invention are not hindered. Examples of such other copolymerizable monomer include anionically polymerizable monomers, such as aromatic vinyl compounds (e.g., styrene, $\alpha$-methylstyrene, o-methylstyrene, m-methylstyrene, p-methylstyrene, 1,3-dimethylstyrene, diphenylethylene, 1-vinylnaphthalene, 4-propylstyrene, 4-cyclohexylstyrene, 4-dodecylstyrene, 2-ethyl-4-benzylstyrene, 4-(phenylbutyl)styrene, etc.), and the like. These other copolymerizable monomers may be used alone or in combination of any two or more thereof. In the case where the polymer block (b) has the aforementioned structural unit derived from other copolymerizable monomer, a bonding configuration thereof may be any of a random configuration or a tapered configuration.

In the case where the polymer block (b) contains the aforementioned structural unit derived from other copolymerizable monomer, its content is preferably 35% by mass or less, more preferably 10% by mass or less, and still more preferably 5% by mass or less.

The content of the structural unit (b1) in the polymer block (b) is preferably 30 to 100% by mass, and more preferably 45 to 100% by mass. In the case where the polymer block (b) contains the structural unit (b2) derived from a conjugated diene other than farnesene, the content of the structural unit (b2) is preferably 70% by mass or less, and more preferably 55% by mass or less.

In the block copolymer (I) that is used in the present invention, from the viewpoints of corrosion resistance, heat resistance, and weather resistance of the thin molded article obtained from the aqueous emulsion, a part or the whole of carbon-carbon double bonds in the polymer block (b) may be hydrogenated. On that occasion, a hydrogenation rate of the polymer block (b) is preferably 70 mol% or more, more preferably 80 mol% or more, still more preferably 85 mol% or more, yet still more preferably 90 mol% or more, even yet still more preferably 91 mol% or more, and especially preferably 92 mol% or more.

In the case where the block copolymer (I) that is used in the present invention contains a polymer block (c) as described later, from the viewpoints of corrosion resistance, heat resistance, and weather resistance of the thin molded article obtained from the aqueous emulsion, a part or the whole of carbon-carbon double bonds in the polymer block (b) and the polymer block (c) may be hydrogenated. On that occasion, a hydrogenation rate of the polymer block (b) and the polymer block (c) is preferably 70 mol% or more, more preferably 80 mol% or more, still more preferably 85 mol% or more, yet still more preferably 90 mol% or more, even yet still more preferably 91 mol% or more, and especially preferably 92 mol% or more.

The hydrogenation rate of the unsaturated double bonds in the polymer block (b), or the polymer block (b) and the polymer block (c), can be determined from a measured value obtained by measuring the content of the unsaturated double bonds in the polymer block (b), or the polymer block (b) and the polymer block (c), before and after hydrogenation by means of nuclear magnetic resonance ($^1$H-NMR).

A bonding configuration of each of the polymer block (a) and the polymer block (b) is not particularly limited, and may be any of a linear configuration, a branched configuration, a radial configuration, or a combination of any two or more of these configurations. Above all, a configuration in which the respective blocks are bonded in a linear configuration is preferred. When the polymer block (a) and the polymer block (b) are represented by a and b, respectively, a bonding configuration represented by (a-b)i, a-(b-a)$_m$, or b-(a-b)n is preferred. Each of 1, m, and n independently represents an integer of 1 or more.

Above all, the block copolymer (I) is preferably a block copolymer containing two or more of the polymer block (a) and one or more of the polymer block (b). From the viewpoints of coating properties or impregnation properties of the aqueous emulsion and corrosion resistance and flexibility of the resulting thin molded article, the block copolymer (I) is more preferably a triblock copolymer or a pentablock copolymer, and still more preferably a triblock copolymer represented by a-b-a.

In the case where the block copolymer (I) has two or more of the polymer blocks (a) or two or more of the polymer blocks (b), each of the polymer blocks may be either a polymer block composed of the same structural unit or a polymer block composed of different kinds of structural units. For example, in the two polymer blocks (a) in the triblock copolymer represented by [a-b-a], the respective aromatic vinyl compounds may be constituted of either the same kind of compound or different kinds of compounds.

A mass ratio of the polymer block (a) and the polymer block (b) [(a)/(b)] in the block copolymer (I) is 5/95 to 70/30. When the mass ratio falls outside the foregoing range, the coating properties or impregnation properties of the aqueous emulsion are deteriorated, and the corrosion resistance and flexibility of the resulting thin molded article are deteriorated. From those viewpoints, the mass ratio of the polymer block (a) and the polymer block (b) [(a)/(b)] is preferably 10/90 to 60/40, more preferably 10/90 to 55/45, still more preferably 10/90 to 40/60, yet still more preferably 15/85 to 40/60, even yet still more preferably 18/82 to 40/60, and especially preferably 18/82 to 35/65.

The block copolymer (I) may contain, in addition to the polymer block (a) and the polymer block (b) as described above, a polymer block (c) constituted of other monomer than the monomer constituting the aforementioned polymer

block (a) and the aforementioned farnesene, so long as the gist of the present invention is not hindered.

Examples of such other monomer include unsaturated hydrocarbon compounds, such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, etc.; functional group-containing unsaturated compounds, such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamide-2-methylprop anesulfonic acid, 2-methacrylamide-2-methylpropanesulfonic acid, vinylsulfonic acid, vinyl acetate, methyl vinyl ether, etc.; and the like. The polymer block (c) may contain a structural unit (b2) derived from a conjugated diene other than the aforementioned farnesene, and the polymer block (c) may be composed of only a structural unit (b2) derived from a conjugated diene other than the aforementioned farnesene. These monomers may be used alone or in combination of any two or more thereof.

In the case where the block copolymer (I) contains the polymer block (c), when the polymer block (c) is represented by c, examples of the bonding configuration include bonding configurations, such as a tetrablock copolymer represented by a-b-a-c or b-a-b-c, a pentablock copolymer represented by b-a-c-a-b, etc.

In the case where the block copolymer (I) has the polymer block (c), its content is preferably 50% by mass or less, more preferably 40% by mass or less, still more preferably 30% by mass or less, and most preferably 10% by mass or less.

From the viewpoints of coating properties or impregnation properties of the aqueous emulsion and corrosion resistance and flexibility of the resulting thin molded article, a peak top molecular weight (Mp) of the block copolymer (I) is preferably 4,000 to 500,000, more preferably 9,000 to 400,000, still more preferably 50,000 to 350,000, yet still more preferably 70,000 to 350,000, even yet still more preferably 100,000 to 350,000, and especially preferably 130,000 to 350,000.

The peak top molecular weight (Mp) in the present specification refers to a peak top molecular weight (Mp) determined by means of gel permeation chromatography in terms of polystyrene as a reference standard substance and means a value measured by the method described in the Examples as described later.

A molecular weight distribution (Mw/Mn) of the block copolymer (I) is preferably 1 to 4, more preferably 1 to 3, and still more preferably 1 to 2. So long as the molecular weight distribution falls within the foregoing range, a scattering in a viscosity of the block copolymer (I) is small, and the handling is easy.

<Production Method of Block Copolymer (I)>

The block copolymer (I) may be produced by a solution polymerization method or methods described in JP 2012-502135A and JP 2012-502136A, or the like. Above all, the solution polymerization method is preferred, and known methods, for example, ionic polymerization methods, such as anionic polymerization, cationic polymerization, etc., a radical polymerization method, and the like are applicable. Above all, an anionic polymerization method is preferred.

As for the anionic polymerization method, the aromatic vinyl compound and farnesene and/or the conjugated diene other than farnesene, and optionally the other monomer for constituting the polymer (c) are successively added in the presence of a solvent and an anionic polymerization initiator, and optionally a Lewis base.

Examples of the anionic polymerization initiator include alkali metals, such as lithium, sodium, potassium, etc.; alkaline earth metals, such as beryllium, magnesium, calcium, strontium, barium, etc.; lanthanoid-based rare earth metals, such as lanthanum, neodymium, etc.; compounds containing the aforementioned alkali metal, alkaline earth metal, or lanthanoid-based rare earth metal; and the like. Above all, alkali metals and compounds containing an alkali metal are preferred, and organic alkali metal compounds are more preferred.

Examples of the aforementioned organic alkali metal compound include organic lithium compounds, such as methyllithium, ethyllithium, n-butyllithium, sec-butyllithium, t-butyllithium, hexyllithium, phenyllithium, stilbenelithium, dilithiomethane, dilithionaphthalene, 1,4-dilithiobutane, 1,4-dilithio-2-ethylcyclohexane, 1,3,5-trilithiobenzene, etc.; sodium naphthalene; potassium naphthalene; and the like. Above all, organic lithium compounds are preferred, n-butyllithium and sec-butyllithium are more preferred, and sec-butyllithium is especially preferred. The organic alkali metal compound may be allowed to react with a secondary amine, such as diisopropylamine, dibutylamine, dihexylamine, dibenzylamine, etc., and used as an organic alkali metal amide.

Although an amount of the organic alkali metal compound that is used for the polymerization varies depending upon a molecular weight of the block copolymer (I), it is typically in the range of from 0.01 to 3% by mass on the basis of a total amount of the aromatic vinyl compound, the farnesene, and the conjugated diene other than farnesene.

The solvent is not particularly limited so long as it does not adversely affect the anionic polymerization reaction, and examples thereof include saturated aliphatic hydrocarbons, such as n-pentane, isopentane, n-hexane, n-heptane, isooctane, etc.; saturated alicyclic hydrocarbons, such as cyclopentane, cyclohexane, methylcyclopentane, etc.; aromatic hydrocarbons, such as benzene, toluene, xylene, etc.; and the like. These solvents may be used alone or in combination of any two or more thereof.

The Lewis base acts for controlling a microstructure of each of the structural unit derived from farnesene and the structural unit derived from a conjugated diene other than farnesene. Examples of such a Lewis base include ether compounds, such as dibutyl ether, diethyl ether, tetrahydrofuran (THF), dioxane, ethylene glycol diethyl ether, etc.; pyridine; tertiary amines, such as N,N,N',N'-tetramethylethylenediamine (TMEDA), trimethylamine, etc.; alkali metal alkoxides, such as potassium t-butoxide, etc.; phosphine compounds; and the like. In the case of using the Lewis base, it is preferred that its amount is typically in the range of from 1 to 1,000 mol equivalent on the basis of 1 mol of the anionic polymerization initiator.

A temperature of the polymerization reaction is in the range of typically from -80 to 150°C, preferably from 0 to 100°C, and more preferably from 10 to 90°C. The mode of the polymerization reaction may be either a batchwise mode or a continuous mode. The aromatic vinyl compound and the farnesene and/or the conjugated diene other than farnesene are supplied into the polymerization reaction solution in a continuous or intermittent manner such that the abundance ratio of each of the monomers falls within a specified range, or the respective monomers are successively polymerized such that each of the monomers in the polymerization reaction system becomes a specified ratio to thereby produce the block copolymer (I).

The polymerization reaction may be stopped by adding an alcohol, such as methanol, isopropanol, etc., as a polymerization terminator. The resulting polymerization reaction solution may be poured into a poor solvent, such as methanol, etc., to precipitate the block copolymer (I). Alternatively, when the polymerization reaction solution is rinsed with water, separated, and then dried, the block copolymer (I) may be isolated.

In the present polymerization step, the block copolymer (I) in an unmodified form may be obtained as described above; however, by introducing a functional group into the aforementioned block copolymer (I) prior to a hydrogenation step as described later, the block copolymer (I) in a modified form may be obtained. Examples of a functional group that may be introduced include an amino group, an alkoxysilyl group, a hydroxyl group, an epoxy group, a carboxyl group, a carbonyl group, a mercapto group, an isocyanate group, an acid anhydride group, and the like.

Examples of the method of modifying the block copolymer (I) include a method in which before adding the polymerization terminator, a modifier capable of reacting with a polymerization-active terminal, such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, 2,4-tolylene diisocyanate, 4,4'-bis(diethylamino)benzophenone, N-vinylpyrrolidone, etc., or other modifier as described in JP 2011-132298A, is added. The isolated copolymer may be grafted with maleic anhydride or the like and used.

The site into which the functional group is introduced may be either a polymerization terminal or a side chain of the block copolymer (I). The functional group may be used alone or in combination of any two or more thereof. It is preferred that the modifier is added in an amount in the range of typically from 0.01 to 10 mol equivalent on the basis of the anionic polymerization initiator.

Although the block copolymer (I) or the modified block copolymer (I), which is obtained by the aforementioned method, may be used as the block copolymer (I) as it is, a hydrogenated block copolymer obtained by subjecting the block copolymer (I) to a hydrogenation step may also be used as the block copolymer (I). As the hydrogenation method, known methods may be adopted. For example, a solution prepared by dissolving the block copolymer (I) in a solvent that does not affect the hydrogenation reaction is subjected to a hydrogenation reaction in the presence of, as a hydrogenation catalyst, a Ziegler-based catalysts; a metal catalyst obtained by supporting nickel, platinum, palladium, ruthenium, or rhodium, on carbon, silica, diatomaceous earth, or the like; or an organic metal complex having a cobalt, nickel, palladium, rhodium, or ruthenium metal. Above all, palladium carbon having palladium supported on carbon is preferably used as the hydrogenation catalyst.

In the hydrogenation reaction, a hydrogen pressure is preferably 0.1 to 20 MPa, a reaction temperature is preferably 100 to 200°C, and a reaction time is preferably 1 to 20 hours.

[Protective Colloid (II)]

In the present invention, for the purpose of making the block copolymer (I) that is a hydrophobic colloid stable against an electrolyte, a protective colloid (II) is used. In the present invention, the protective colloid (II) refers to a hydrophilic colloid capable of making the block copolymer (I) that is a hydrophobic colloid stable against an electrolyte.

As for a reason why the protective colloid (II) is able to make the block copolymer (I) that is a hydrophobic colloid stable, it may be considered that the protective colloid (II) that is a hydrophilic colloid covers the block copolymer (I) that is a hydrophobic colloid, thereby exhibiting properties of a hydrophilic colloid as a whole.

Examples of the protective colloid (II) include polyvinyl alcohol, modified polyvinyl alcohol; water-soluble cellulose derivatives, such as methyl cellulose, ethyl cellulose, hydroxymethyl cellulose, hydroxypropyl cellulose, etc.; water-soluble salts of (meth)acrylic ester-unsaturated carboxylic acid copolymers; styrene-maleic anhydride copolymer salts, maleinized polybutadiene salts, naphthalenesulfonate salts, polyacrylate salts, and the like. These protective colloids (II) may be used alone or in combination of any two or more thereof.

Of those, as the protective colloid (II), polyvinyl alcohol or water-soluble salts of (meth)acrylic ester-unsaturated carboxylic acid copolymers are preferred, and water-soluble salts of (meth)acrylic ester-unsaturated carboxylic acid copolymers are more preferred.

Examples of the (meth)acrylic ester that constitutes the aforementioned (meth)acrylic ester-unsaturated carboxylic acid copolymer include acrylic esters, such as methyl acrylate, ethyl acrylate, butyl acrylate, etc.; and methacrylic esters, such as methyl methacrylate, ethyl methacrylate, butyl methacrylate, etc.

Meanwhile, examples of the unsaturated carboxylic acid that constitutes the aforementioned (meth)acrylic ester-unsaturated carboxylic acid copolymer include acrylic acid, methacrylic acid, monomethylitaconic acid, and the like. In addition to these monomers, styrene or the like may be further copolymerized.

Specific examples of the water-soluble salt of (meth)acrylic ester-unsaturated carboxylic acid copolymer include water-soluble salts of acrylic ester-unsaturated carboxylic acid copolymers, water-soluble salts of methacrylic ester-unsaturated carboxylic acid copolymers, water-soluble salts of styrene-acrylic ester-unsaturated carboxylic acid copolymers, and water-soluble salts of styrene-methacrylic ester-unsaturated carboxylic acid copolymers.

Specific examples of the aforementioned water-soluble salt include monovalent metal salts, such as a sodium salt, a potassium salt, etc., amine salts, such as monoethanolamine, diethanolamine, triethanolamine, etc., and ammonium salts. Of those, ammonium salts are preferred.

These water-soluble salts may be used alone or in combination of any two or more thereof.

A weight average molecular weight of the aforementioned water-soluble salt of (meth)acrylic ester-unsaturated carboxylic acid copolymer is preferably 3,000 to 50,000, more preferably 3,000 to 25,000, still more preferably 3,000 to 10,000, and yet still more preferably 4,000 to 6,000.

From the viewpoints of coating properties or impregnation properties of the aqueous emulsion and corrosion resistance of the resulting thin molded article, the polyvinyl alcohol that is used as the protective colloid (II) is preferably one having a degree of polymerization of 300 to 2,600 and a degree of hydrolysis of 70 to 92 mol% (the weight average molecular weight is in the range of from 1,500 to 130,000). The polyvinyl alcohol is more preferably one having a degree of polymerization of 300 to 1,500 and a degree of hydrolysis of 78 to 92 mol%. The polyvinyl alcohol is also preferably one modified with a carboxyl group, a sulfonate group, an acetoacetyl group, or a cationic group.

A content of the protective colloid (II) is 3 to 35 parts by mass, preferably 3 to 32 parts by mass, more preferably 3 to 30 parts by mass, still more preferably 10 to 28 parts by mass, and yet still more preferably 13 to 25 parts by mass based on 100 parts by mass of the block copolymer (I). When the compounding proportion of the protective colloid (II) is less than 3 parts by mass, emulsification failure is caused, so that an emulsion is not obtained, whereas when it is more than 35 parts by mass, the coating film is poor in corrosion resistance, and hence, the both are not preferred.

[Softening Agent (III)]

From the viewpoint of adjusting the flexibility of the block copolymer (I), the aqueous emulsion of the present invention may contain a softening agent (III), if desired.

As the softening agent (III), conventionally known non-aromatic softening agents for rubbers may be used, and above all, non-aromatic mineral oil-based softening agents for rubbers, or liquid or low-molecular weight synthetic softening agents are preferred. The non-aromatic softening agents for rubbers may be used alone or in combination of any two or more thereof.

Examples of the non-aromatic softening agent for rubbers may include paraffin-based process oils, hydrogenated paraffin-based process oils, naphthene-based process oils, liquid paraffins; vegetable oil-based softening agents, such as peanut oil, rosin, etc.; synthetic softening agents, such as an ethylene-$\alpha$-olefin oligomer, low-molecular weight polyisobutylene, liquid polybutene, liquid polybutadiene, liquid polyisoprene, etc.; and the like. Above all, low-molecular weight polyisobutylene, paraffin-based process oils, hydrogenated paraffin-based process oils, and naphthene-based process oils are preferred.

From the viewpoint of adjusting the flexibility of the block copolymer (I), a kinetic viscosity at 40°C of the non-aromatic softening agent for rubbers is preferably 20 to 800 $mm^2/s$, more preferably 30 to 500 $mm^2/s$, and still more preferably 30 to 400 $mm^2/s$.

In the case of containing the softening agent (III), its content is preferably 0.5 to 150 parts by mass, more preferably 1 to 140 parts by mass, still more preferably 5 to 130 parts by mass, yet still more preferably 10 to 125 parts by mass, and even yet still more preferably 20 to 125 parts by mass based on 100 parts by mass of the block copolymer (I). When the content of the softening agent (III) falls within the foregoing range, not only the mechanical properties of the resulting thin molded article are improved, but also bleedout of the softening agent (III) from the thin molded article is hardly caused.

[Additives]

To the aqueous emulsion of the present invention, various additives may be further added depending upon an application within the range where the effects of the present invention are not hindered.
Examples of the additive include an anionic surfactant, a cationic surfactant, a nonionic surfactant, a filler, a modifier, a pigment, and the like. However, when the surfactant is put too much in the aqueous emulsion, the resistance of the thin molded article is hindered, and therefore, it is necessary to restrain the addition amount thereof to a minimum requirement.

[Preparation Method of Aqueous Emulsion]

The aqueous emulsion can be, for example, prepared by the following method.
The block copolymer (I) and the protective colloid (II), and optionally the softening agent (III), the additive(s), and the like are dissolved in an organic solvent, such as toluene, xylene, cyclohexane, etc., water is subsequently added, and the contents are charged into a stirring machine, such as a homomixer, etc., and stirred at room temperature to 85°C, thereby obtaining a dispersion liquid. Subsequently, the organic solvent is distilled off under reduced pressure at an elevated temperature, whereby the aqueous emulsion can be obtained. The addition amount of water is not particularly limited because the aqueous emulsion may be diluted, and the water has only to be added within the range where the aqueous emulsion in a desired solid content concentration is obtained.
The aqueous emulsion can also be obtained by adding the block copolymer (I), the protective colloid (II), and water, and optionally the softening agent (III) and the additive(s) in an autoclave type stirring machine without using an organic solvent, followed by stirring at a temperature of 100°C to 200°C.
It is also possible to further atomize the resulting aqueous emulsion by a high-pressure homogenizer, if desired. The emulsification method is not limited to the emulsification method as exemplified herein, but a chemical emulsification method, such as an inversion emulsification method, a phase inversion temperature emulsification method, a D-phase emulsification method, a gel emulsification method, etc., may also be adopted.
A content of the block copolymer (I) in the aqueous emulsion may be arbitrarily chosen taking into consideration a thickness of the thin molded article that is formed using the aqueous emulsion, a time required for the drying step, and the like, but it is preferably 60% by mass or less from the viewpoint of stability of the aqueous emulsion.

[2] Thin Molded article and Production Method of Thin Molded article

The thin molded article of the present invention is one obtained from the aqueous emulsion of the present invention, and specifically, it is one including a dispersoid in the aqueous emulsion, which is obtained by drying the aqueous emulsion of the present invention to remove water. The aforementioned "dispersoid" refers to components other than a dispersion medium in the aqueous emulsion of the present invention.
Although the thin molded article of the present invention may be produced by a known method using the aqueous emulsion of the present invention, it is preferably produced by a production method including a step of coating a substrate with the aqueous emulsion to form a coating film; and a step of drying the coating film.
Examples of the step of coating a substrate with the aqueous emulsion to form a coating film include a dip molding method of dipping a substrate with the aqueous emulsion; a method of spraying a substrate with the aqueous emulsion; a method of brushing a substrate with the aqueous emulsion; and the like.
The thin molded article of the present invention may also be produced by a production method including a step of impregnating a body to be impregnated with the aqueous emulsion to obtain an impregnated body; and a step of drying the impregnated body.
Examples of the step of impregnating a body to be impregnated with the aqueous emulsion to obtain an - impregnated body include a method of impregnating a body to be impregnated, which is composed of fibers, such as a fabric, a nonwoven fabric, or the like, with the aqueous emulsion to obtain an impregnated body.
The substrate and the body to be impregnated as described above are not particularly limited, and examples thereof include thermoplastic resins, various metals, various glasses, various leathers, various papers, various nonwoven fabrics, various textiles, various foamed bodies, various timbers, and the like. Above all, thermoplastic resins, various leathers, and various nonwoven fabrics are preferably used.
Although the step of drying the coating film or impregnated body as formed in the aforementioned step varies depending upon a thickness of the coating film or a size of the impregnated body, it can be achieved by performing drying at a temperature ranging preferably from 25 to 150°C and more preferably from 60 to 150°C, for preferably 1 to 48 hours and more preferably 1 to 36 hours.
In the present invention, the drying of the coating film may also be performed under reduced pressure. A degree of pressure reduction is preferably 0.4 to 6.7 kPa, and more preferably 0.5 to 5.3 kPa.

A thickness of the thin molded article of the present invention varies depending upon an application and is not particularly limited; however, it is preferably 30 to 1,000 μm, more preferably 30 to 500 μm, and still more preferably 50 to 300 μm.

A type A hardness of the thin molded article of the present invention is preferably 1 or more, more preferably 2 or more, and still more preferably 3 or more from the viewpoint of strength. Although an upper limit of the hardness is not particularly limited, it is preferably 60 or less, more preferably 55 or less, still more preferably 40 or less, and yet still more preferably 30 or less from the viewpoint of flexibility. The hardness of the thin molded article may be measured by the method described in the Examples.

The thin molded article of the present invention may be used alone or may be laminated and used. A shape of the thin molded article of the present invention is not particularly limited, and the thin molded article may be formed in a shape, such as a film, a sheet, a pair of gloves, a condom, a finger sac, a catheter, automotive members, e.g., a door rim, a sheet, etc., various cushions, e.g., falsies of brassiere, etc., an expansion and contraction member of diaper, an expansion and contraction part of poultice, etc., depending upon a desired application.

Examples

The present invention is hereunder described by reference to Examples, but it should not be construed that the present invention is limited to these Examples. β-farnesene (purity: 97.6% by mass, manufactured by Amyris, Inc.) was purified with a molecular sieve of 3 angstrom and distilled under a nitrogen atmosphere to remove hydrocarbon-based impurities, such as zingiberene, bisabolene, farnesene epoxide, farnesol isomer, E,E-farnesol, squalene, ergosterol, several kinds of isomers of farnesene, etc., and then used for the following polymerization.

Each of the components used in the Examples and Comparative Examples is as follows.

<Block Copolymer (I)>

Block copolymers (I-1) to (1-9) of Production Examples 1 to 9 as described later.

<Block Copolymer (I')>

Block copolymers (I'-1) to (I'-5) of Production Examples 10 to 14 as described later.

<Protective Colloid (II)>

Protective colloid (II-1): An ammonium salt of an acrylic ester-unsaturated carboxylic acid copolymer (acrylic acid/methacrylic acid/methyl methacrylate/butyl acrylate/butyl methacrylate = 8/8/11/11/11 (mass ratio), weight average molecular weight: 5,000)

Protective colloid (II-2): Polyvinyl alcohol (trade name: "POVAL 405", manufactured by Kuraray Co., Ltd., degree of polymerization: 500, degree of hydrolysis: 81.5%)

<Softening Agent (III)>

Paraffin-based process oil ("DIANA PROCESS OIL PW-90", manufactured by Idemitsu Kosan Co., Ltd., kinetic viscosity at 40°C: 95 $mm^2/s$ (40°C)) <Surfactant>

Dodecylbenzenesulfonate (trade name: "NEOPELEX", manufactured by Kao Corporation)

Details of each of the measurement methods in the Production Examples are as follows.

(1) Measurement Method of Molecular Weight Distribution, Peak Top Molecular Weight (Mp), and the Like

A peak top molecular weight (Mp) and a molecular weight distribution (Mw/Mn) of a hydrogenated block copolymer were determined by means of GPC (gel permeation chromatography) in terms of a molecular weight of polystyrene as a reference standard substance. The peak top molecular weight (Mp) was determined from a position of a peak top of the molecular weight distribution. Measuring devices and conditions are as follows.

- Device: GPC device "GPC8020", manufactured by Tosoh Corporation
- Separation column: "TSKgel G4000HXL", manufactured by Tosoh Corporation
- Detector: "RI-8020", manufactured by Tosoh Corporation
- Solvent: Tetrahydrofuran
- Solvent flow rate: 1.0 mL/min

- Sample concentration: 5 mg/10 mL
- Column temperature: 40°C

(2) Measurement Method of Hydrogenation Rate

In each of the Production Examples, a block copolymer before hydrogenation and a block copolymer after hydrogenation (hydrogenated block copolymer) were respectively dissolved in a deuterated chloroform solvent, and each of the resulting solutions was subjected to $^1$H-NMR measurement at 50°C using "Lambda-500", manufactured by JOEL Ltd. A hydrogenation rate of the polymer block (b) in the block copolymer (I) was calculated from the peak of protons contained in carbon-carbon double bonds appearing at 4.5 to 6.0 ppm in the resulting spectrum, according to the following formula.

Hydrogenation rate = {1 - (Molar number of carbon-carbon double bonds contained per mol of block copolymer after hydrogenation)/(Molar number of carbon-carbon double bonds contained per mol of block copolymer before hydrogenation)} × 100 (mol%)

<Block Copolymer (I)>

[Production Example 1]

A pressure reaction vessel having been purged with nitrogen and dried was charged with 50.0 kg of cyclohexane as a solvent and 36.9 g of sec-butyllithium (10.5% by mass cyclohexane solution) (3.87 g of sec-butyllithium) as an anionic polymerization initiator. After raising the temperature to 50°C, 1.87 kg of styrene (1) was added, and the contents were polymerized for one hour. Subsequently, 8.75 kg of β-farnesene was added, and the contents were polymerized for two hours. Furthermore, 1.87 kg of styrene (2) was added, and the contents were polymerized for one hour, thereby obtaining a reaction solution containing a polystyrene-poly(β-farnesene)-polystyrene triblock copolymer. To this reaction solution, palladium carbon (amount of palladium supported: 5% by mass) was added as a hydrogenation catalyst in an amount of 5% by mass on the basis of the aforementioned block copolymer, and the contents were allowed to react under conditions at a hydrogen pressure of 2 MPa and 150°C for 10 hours. After allowing the reaction mixture to stand for cooling and releasing the pressure, the palladium carbon was removed by means of filtration, and the filtrate was concentrated and further dried in vacuo, thereby obtaining a hydrogenated product of the polystyrene-poly(β-farnesene)-polystyrene triblock copolymer (hereinafter also referred to as "block copolymer (I-1)"). The block copolymer (I-1) was subjected to the aforementioned evaluations. The results are shown in Table 1.

[Production Examples 2 to 7]

Block copolymers (I-2) to (1-7) were produced in the same procedures as those in Production Example 1, except for following the formulations as shown in Table 1, respectively. The resulting block copolymers (I-2) to (I-7) were subjected to the aforementioned evaluations. The results are shown in Table 1.

[Production Example 8]

A block copolymer (I-8) was produced in the same procedures as those in Production Example 1, except for following the formulation as shown in Table 1 and performing the hydrogenation reaction under conditions at a hydrogen pressure of 2 MPa and at 150°C for 4 hours. The resulting block copolymer (1-8) was subjected to the aforementioned evaluations. The results are shown in Table 1.

[Production Example 9]

A pressure reaction vessel having been purged with nitrogen and dried was charged with 50.0 kg of cyclohexane as a solvent, 190.5 g of sec-butyllithium (10.5% by mass cyclohexane solution) as an anionic polymerization initiator, and 400 g of tetrahydrofuran as a Lewis base. After raising the temperature to 50°C, 6.34 kg of β-farnesene was added, and the contents were polymerized for 2 hours. Subsequently, 2.50 kg of the styrene (1) was added, and the contents were polymerized for one hour. 3.66 kg of butadiene was further added, and the contents were polymerized for one

hour. Subsequently, 20 g of dichlorodimethylsilane as a coupling agent was added to this polymerization reaction solution, and the contents were allowed to react for one hour, thereby obtaining a reaction solution containing a poly(β-farnesene)-polystyrene-polybutadiene-polystyrene-poly(β-farnesene)pentab lock copolymer. To this reaction solution, palladium carbon (amount of palladium supported: 5% by mass) as a hydrogenation catalyst was added in an amount of 5% by mass on the basis of the aforementioned block copolymer, and the contents were allowed to react under conditions at a hydrogen pressure of 2 MPa and 150°C for 10 hours. After allowing the reaction mixture to stand for cooling and releasing the pressure, the palladium carbon was removed by means of filtration, and the filtrate was concentrated and further dried in vacuo, thereby obtaining a hydrogenated product of the poly(β-farnesene)-polystyrene-polybutadiene-polystyrene-poly(β-farnesene)pentab lock copolymer (hereinafter referred to as "block copolymer (I-9)"). The block copolymer (I-9) was subjected to the aforementioned evaluations. The results are shown in Table 1.

<Block Copolymer (I')>

[Production Examples 10, 11, 13, and 14]

Block copolymers (I'-1), (I'-2), (I'-4), and (I'-5) were produced in the same procedures as those in Production Example 1, except for following the formulations as shown in Table 2, respectively. Each of the resulting block copolymers was subjected to the aforementioned evaluations. The results are shown in Table 2.

[Production Example 12]

A block copolymer (I'-3) was produced in the same procedures as those in Production Example 1, except for mixing 50.0 kg of cyclohexane as a solvent with 72 g of tetrahydrofuran as a Lewis base and following the formulation as shown in Table 2. The resulting block copolymer (I'-3) was subjected to the aforementioned evaluations. The results are shown in Table 2.

Table 1

| | | Production Example | | | | | | | | |
|---|---|---|---|---|---|---|---|---|---|---|
| | | 1 | 2 | 3 | 4 | 5 | 6 | 7 | 8 | 9 |
| Block copolymer | | I-1 | I-2 | I-3 | I-4 | I-5 | I-6 | I-7 | I-8 | I-9 |
| Use amount [kg] | | | | | | | | | | |
| | Cyclohexane | 50.0 | 50.0 | 50.0 | 50.0 | 50.0 | 50.0 | 50.0 | 50.0 | 50.0 |
| | sec-Butyllithium (10.5% by mass cyclohexane solution) | 0.0369 | 0.0155 | 0.0413 | 0.0299 | 0.0212 | 0.8340 | 0.0230 | 0.0369 | 0.1905 |
| | Styrene (1) | 1.87 | 1.32 | 1.12 | 2.21 | 1.32 | 1.87 | 1.32 | 1.87 | 2.50 |
| | Styrene (2) | 1.87 | 1.32 | 1.12 | 2.21 | 1.32 | 1.87 | 1.32 | 1.87 | |
| | β-Farnesene | 8.75 | 6.18 | 10.25 | 4.41 | 3.09 | 4.37 | 3.44 | 8.75 | 6.34 |
| | Isoprene | | | | | 3.09 | 4.37 | | | |
| | Butadiene | | | | | | | 2.73 | | 3.66 |
| | Tetrahydrofuran | | | | | | | | | 0.40 |
| | Dichlorodimethylsilane | | | | | | | | | 0.02 |
| | (a)/(b) [mass ratio] (*1) | 30/70 | 30/70 | 18/82 | 50/50 | 30/70 | 30/70 | 30/70 | 30/70 | 20/80 |
| | (b1)/(b) [% by mass] (*2) | 100 | 100 | 100 | 100 | 50 | 50 | 56 | 100 | 100 |
| | Polymer skeleton (*3) | St-F-St | St-F-St | St-F-St | St-F-St | St-(F/Ip)-St | St-(F/Ip)-St | St-(F/Bd)-St | St-F-St | F-St-Bd-St-F |
| Physical properties | | | | | | | | | | |
| | Peak top molecular weight (Mp) of styrene block | 31,000 | 52,000 | 16,600 | 45,000 | 38,000 | 13,700 | 35,000 | 31,000 | 8,000 |
| | Peak top molecular weight (Mp) of hydrogenated block copolymer | 222,000 | 373,400 | 200,500 | 189,000 | 327,000 | 117,000 | 350,000 | 218,000 | 102,000 |
| | Molecular weight distribution (Mw/Mn) | 1.13 | 1.40 | 1.23 | 1.25 | 1.14 | 1.06 | 1.15 | 1.15 | 1.45 |

(continued)

| Physical properties | | | | | | | | | | |
|---|---|---|---|---|---|---|---|---|---|---|
| | Hydrogenation rate (%) (*4) | 91.0 | 90.2 | 93.2 | 95.5 | 98.0 | 98.1 | 98.2 | 74.7 | 93.0 |

(*1) (a)/(b) represents a mass ratio of the polymer block (a) to the polymer block (b).
(*2) (b1)/(b) represents a content of the structural unit (b1) derived from farnesene in the polymer block (b).
(*3) St-F-St represents a polystyrene-poly(β-farnesene)-polystyrene triblock copolymer.
St-(F/Ip)-St represents a polystyrene-poly(p-farnesene/isoprene)-polystyrene triblock copolymer.
St-(F/Bd)-St represents a polystyrene-poly(β-farnesene/butadiene)-polystyrene triblock copolymer.
F-St-Bd-St-F represents a poly(β-farnesene)-polystyrene-polybutadiene-polystyrene-poly(β-farnesene) pentablock copolymer.
(*4) The hydrogenation rate represents a hydrogenation rate of carbon-carbon double bonds in the polymer block (b). However, in the case where the block copolymer (I) contains the polymer block (c), the hydrogenation rate represents a hydrogenation rate of carbon-carbon double bonds in the polymer block (b) and the polymer block (c).

Table 2

| | | Production Example | | | | |
|---|---|---|---|---|---|---|
| | | 10 | 11 | 12 | 13 | 14 |
| Block copolymer | | I'-1 | I'-2 | I'-3 | I'-4 | I'-5 |
| Use amount [kg] | | | | | | |
| | Cyclohexane | 50.0 | 50.0 | 50.0 | 50.0 | 50.0 |
| | sec-Butyllithium (10.5% by mass cyclohexane solution) | 0.0169 | 0.2512 | 0.1633 | 0.1394 | 0.0310 |
| | Styrene (1) | 2.22 | 3.21 | 1.87 | 1.87 | 1.32 |
| | Styrene (2) | 2.22 | 3.21 | 1.87 | 1.87 | 1.32 |
| | β-Farnesene | 1.11 | | | | |
| | Isoprene | | 15.00 | | 4.88 | 3.44 |
| | Butadiene | | | 8.75 | 3.87 | 2.73 |
| | Tetrahydrofuran | | | 0.072 | | |
| | (a)/(b) [mass ratio] (*1) | 80/20 | 30/70 | 30/70 | 30/70 | 30/70 |
| | (b1)/(b) [% by mass] (*2) | 100 | 0 | 0 | 0 | 0 |
| | Polymer skeleton (*3) | St-F-St | St-Ip-St | St-Bd-St | St-(Ip/Bd)-St | St-(Ip/Bd)-St |
| Physical properties | | | | | | |
| | Peak top molecular weight (Mp) of styrene block | 80,000 | 7,800 | 7,000 | 8,200 | 26,000 |
| | Peak top molecular weight (Mp) of hydrogenated block copolymer | 203,136 | 71,200 | 76,900 | 82,500 | 262,000 |
| | Molecular weight distribution (Mw/Mn) | 1.26 | 1.03 | 1.13 | 1.06 | 1.06 |
| | Hydrogenation rate (%) (*4) | 95.6 | 99.1 | 99.0 | 97.8 | 97.8 |

(*1) (a)/(b) represents a mass ratio of the polymer block (a) to the polymer block (b).
(*2) (b1)/(b) represents a content of the structural unit (b1) derived from farnesene in the polymer block (b).
(*3) St-F-St represents a polystyrene-poly(p-farnesene)-polystyrene triblock copolymer.
St-(Ip/Bd)-St represents a polystyrene-poly(isoprene/butadiene))-polystyrene triblock copolymer.
St-Bd-St represents a polystyrene-polybutadiene-polystyrene triblock copolymer.
St-Ip-St represents a polystyrene-polyisoprene-polystyrene triblock copolymer.
(*4) The hydrogenation rate represents a hydrogenation rate of carbon-carbon double bonds in the polymer block (b).

[Examples 1 to 12 and Comparative Examples 1 to 9]

200 g of a toluene solution in a concentration of 30% by mass containing respective components of each of the block copolymers obtained in Production Examples 1 to 14, a protective colloid, a softening agent, and a surfactant in a compounding ratio as shown in each of Tables 3 and 4 was prepared. Subsequently, 400 g of distilled water was added, and the contents were charged in a stirring tank equipped with a homomixer and stirred at 10,000 rpm for 10 minutes. Thereafter, the contents were transferred into a pressure type homogenizer and further subjected to emulsification. Subsequently, the toluene and distilled water were distilled off by a rotary evaporator under conditions at 0.8 kPa and at 60°C, thereby obtaining an aqueous emulsion containing distilled water in a compounding ratio as shown in each of Tables 3 and 4 (solid content concentration: 40% by mass).

A glass plate as a substrate was dipped with the resulting aqueous emulsion to form a coating film having a thickness of 2.4 mm on a surface of the glass plate, followed by a vacuum-dry heat treatment at 120°C and at 0.67 kPa for 24 hours. Subsequently, the resultant was cooled and cut into a size of 10 cm in length and 10 cm in width by using a cutter knife, and the resulting film was then peeled away from the glass plate to obtain a thin molded article having a thickness of 100 μm. In the present production process, the coating properties of the aqueous emulsion and the corrosion

resistance were evaluated in the following manners.

As for the measurement of hardness and the measurement of permanent set, a coating film was formed in the same method as described above, a drying step was repeated 7 to 10 times, and finally, a vacuum-dry heat treatment was performed at 120°C and at 0.67 kPa for 24 hours to prepare a thin molded article having a thickness of 1 mm. The resulting thin molded article was used for the evaluations.

(1) Evaluation Method of Coating Properties of Aqueous Emulsion

As for the coating properties of the aqueous emulsion prepared in each of the Examples and Comparative Examples, bodies to be coated of two kinds of glass and stainless steel were used and evaluated according to the following criteria. The results are shown in Tables 3 and 4.

(Evaluation Criteria)

1: Dispersibility was good, and coating was possible.
2: Although dispersibility was poor, coating was possible.
3: Dispersibility was poor, and coating was impossible.

(2) Evaluation Methods of Corrosion Resistance

(i) Water Resistance Test

The thin molded article before peeling away from the glass plate was dipped in distilled water at 25°C for 3 days, and then visually inspected for change in state, thereby performing the evaluation according to the following criteria. The results are shown in Tables 3 and 4.

(ii) Acid Resistance Test

The test was performed in the same manner as in the aforementioned water resistance test, expect for changing the distilled water to a 30% by mass sulfuric acid aqueous solution, thereby performing the evaluation. The results are shown in Tables 3 and 4.

(iii) Alkali Resistance Test

The test was performed in the same manner as in the aforementioned water resistance test, expect for changing the distilled water to a 30% by mass potassium hydroxide aqueous solution, thereby performing the evaluation. The results are shown in Tables 3 and 4.

(Evaluation Criteria)

1: The appearance of the thin molded article was identical with the state before dipping.
2: The thin molded article partially caused blushing.
3: The whole of the thin molded article caused blushing.
4: The thin molded article was dissolved.

(3) Measurement Method of Hardness

Six sheets of molded bodies each having a thickness of 1 mm as obtained in each of the Examples and Comparative Examples were superimposed and measured using an indenter of a type A durometer in conformity with JIS K6253. It is meant that the lower the numerical value, the more excellent the flexibility is.

(4) Measurement Method of Permanent set

A test piece of a dumbbell No. 1 type was punched out and prepared from the molded article having a thickness

of 1 mm as obtained in each of the Examples and Comparative Examples in conformity with JIS K6251, and a gauge having a gauge length of 2 cm was marked in a parallel portion of the test piece. This test piece was stretched (100% elongation) such that the gauge length became 4 cm and held under an atmosphere at a temperature of 24°C and at a relative humidity of 50% for 10 minutes, and the elongation was then released. Thereafter, when the resulting test piece was allowed to stand under an atmosphere at a temperature of 24°C and at a relative humidity of 50% for 10 minutes, the gauge length (l': cm) was measured, and the permanent set (%) = 100 × (l' -2)/2 was determined. It is meant that the lower the numerical value, the more excellent the rubber elasticity is.

Table 3

| | | Example | | | | | Comparative Example | | | | | |
|---|---|---|---|---|---|---|---|---|---|---|---|---|
| | | 1 | 2 | 3 | 4 | 5 | 1 | 2 | 3 | 4 | 5 | 6 |
| Aqueous emulsion composition (parts by mass) | | | | | | | | | | | | |
| (I) | Block copolymer (I-1) | 100 | 100 | | | | 100 | 100 | 100 | | | |
| | Block copolymer (I-2) | | | | | | | | | | | |
| | Block copolymer (I-3) | | | 100 | | | | | | | | |
| | Block copolymer (I-4) | | | | | | | | | | | |
| | Block copolymer (I-5) | | | | | | | | | | | |
| | Block copolymer (I-6) | | | | | | | | | | | |
| | Block copolymer (I-7) | | | | | | | | | | | |
| | Block copolymer (I-8) | | | | 100 | | | | | | | |
| | Block copolymer (I-9) | | | | | 100 | | | | | | |
| | Block copolymer (I'-1) | | | | | | | | | | | |
| | Block copolymer (I'-2) | | | | | | | | | 100 | | - |
| | Block copolymer (I'-3) | | | | | | | | | | | |
| | Block copolymer (I'-4) | | | | | | | | | | 100 | |

(continued)

| | | Example | | | | | Comparative Example | | | | | |
|---|---|---|---|---|---|---|---|---|---|---|---|---|
| | | 1 | 2 | 3 | 4 | 5 | 1 | 2 | 3 | 4 | 5 | 6 |
| Aqueous emulsion composition (parts by mass) | | | | | | | | | | | | |
| | Block copolymer (I'-5) | | | | | | | | | | | 100 |
| (II) | Protective colloid (II-1) | 13 | | | 13 | 13 | 2 | 37 | | 13 | 13 | 20 |
| | Protective colloid (II-2) | | 13 | 20 | | | | | | | | |
| (III) | Softening agent | 0 | 0 | 0 | 0 | 0 | 0 | 0 | 0 | 0 | 0 | 0 |
| | Surfactant | | | | | | | | 13 | | | |
| | Distilled water | 170 | 170 | 180 | 170 | 170 | 153 | 205 | 170 | 170 | 170 | 180 |
| Solid content concentration (% by mass) (*5) | | 40 | 40 | 40 | 40 | 40 | 40 | 40 | 40 | 40 | 40 | 40 |
| Evaluation results | | | | | | | | | | | | |
| Coating properties of aqueous emulsion Substrate: Glass | | 1 | 1 | 1 | 1 | 1 | 3 | 1 | 1 | 1 | 2 | 3 |
| Coating properties of aqueous emulsion Substrate: Stainless steel | | 1 | 1 | 1 | 1 | 1 | 3 | 1 | 1 | 1 | 2 | 3 |
| Corrosion resistance: | Water resistance test | 1 | 1 | 1 | 1 | 1 | - | 3 | 4 | 1 | 1 | - |
| | Acid resistance test | 1 | 1 | 1 | 1 | 1 | - | 3 | 4 | 1 | 1 | - |
| | Alkali resistance test | 1 | 1 | 1 | 1 | 1 | - | 4 | 4 | 1 | 1 | - |
| Hardness [Type A] | | 22 | 23 | 7 | 25 | 21 | - | 23 | 23 | 70 | 67 | - |
| Permanent set (%) | | 0.8 | 0.8 | 0.9 | 0.9 | 1.0 | - | 0.8 | 0.9 | 7.4 | 8.2 | - |
| (*5) Solid content concentration (% by mass) = 100 × [{Block copolymer (I)} + (Protective colloid (II)} + {Softening agent (III)} + (Surfactant)]/(Total amount) | | | | | | | | | | | | |

Table 4

| | | Example | | | | | | | Comparative Example | | |
|---|---|---|---|---|---|---|---|---|---|---|---|
| | | 6 | 7 | 8 | 9 | 10 | 11 | 12 | 7 | 8 | 9 |
| Aqueous emulsion composition (parts by mass) | | | | | | | | | | | |
| | Block copolymer (I-1) | 100 | | | | | | | | | |

(continued)

| | | Example | | | | | | | Comparative Example | | |
|---|---|---|---|---|---|---|---|---|---|---|---|
| | | 6 | 7 | 8 | 9 | 10 | 11 | 12 | 7 | 8 | 9 |
| (I) | Block copolymer (I-2) | | 100 | | | | | | | | |
| | Block copolymer (I-3) | | | | | | | | | | |
| | Block copolymer (I-4) | | | 100 | | | | | | | |
| | Block copolymer (I-5) | | | | 100 | | | | | | |
| | Block copolymer (I-6) | | | | | 100 | | | | | |
| | Block copolymer (I-7) | | | | | | 100 | | | | |
| | Block copolymer (I-8) | | | | | | | | | | |
| | Block copolymer (I-9) | | | | | | | 100 | | | |
| | Block copolymer (I'1) | | | | | | | | 100 | | |
| | Block copolymer (I'-2) | | | | | | | | | | |
| | Block copolymer (I'-3) | | | | | | | | | 100 | |
| | Block copolymer (I'-4) | | | | | | | | | | |
| | Block copolymer (I'-5) | | | | | | | | | | 100 |
| (II) | Protective colloid (II-1) | 20 | 20 | 20 | 20 | 22 | 30 | 30 | 20 | 30 | 30 |
| | Protective colloid (II-2) | | | | | | | | | | |
| (III) | Softening agent | 30 | 50 | 50 | 100 | 70 | 120 | 50 | 50 | 120 | 120 |
| | Surfactant | | | | | | | | | | |
| | Distilled water | 225 | 255 | 255 | 330 | 288 | 375 | 375 | 255 | 375 | 375 |
| Solid content concentration (% by mass) (*5) | | 40 | 40 | 40 | 40 | 40 | 40 | 40 | 40 | 40 | 40 |
| Evaluation results | | | | | | | | | | | |
| Coating properties of aqueous emulsion Substrate: Glass | | 1 | 1 | 1 | 1 | 1 | 1 | 1 | 2 | 1 | 3 |
| Coating properties of aqueous emulsion Substrate: Stainless steel | | 1 | 1 | 1 | 1 | 1 | 1 | 1 | 2 | 1 | 3 |
| Corrosion | resistance: Water resistance test | 1 | 1 | 1 | 1 | 1 | 1 | 1 | 1 | 1 | - |
| | Acid resistance test | 1 | 1 | 1 | 1 | 1 | 1 | 1 | 1 | 1 | - |

(continued)

| | | Example | | | | | | | Comparative Example | | |
|---|---|---|---|---|---|---|---|---|---|---|---|
| | | 6 | 7 | 8 | 9 | 10 | 11 | 12 | 7 | 8 | 9 |
| | Alkali resistance test | 1 | 1 | 1 | 1 | 1 | 1 | 1 | 1 | 1 | - |
| Hardness [Type A] | | 10 | 20 | 29 | 25 | 28 | 24 | 5 | 97 | 35 | - |
| Permanent set (%) | | 0.3 | 0.7 | 2.9 | 1.8 | 2.6 | 1.9 | 0.2 | 92 | 2.8 | - |
| (*5) Solid content concentration (% by mass) = 100 × [{Block copolymer (I)} + {Protective colloid (II)} + {Softening agent (III)} + (Surfactant)]/(Total amount) | | | | | | | | | | | |

As is clear from the results of the Examples and Comparative Examples, the aqueous emulsion of the present invention is good in coating properties on the substrate, and the thin molded article obtained from the aqueous emulsion of the present invention is excellent in corrosion resistance and mechanical properties. In particular, as is clear from comparison with Comparative Examples 4, 5, and 8, in the case of using the block copolymer (I) that falls within the scope of the present invention, nevertheless its peak top molecular weight is 200,000 or more, it has coating properties equal to or more than those of the conventional hydrogenated products of styrene-isoprene-based or styrene-butadiene-based copolymer having a peak top molecular weight of about 70,000 to 80,000, and the thin molded article obtained from the aqueous emulsion is low in hardness, more excellent in flexibility, small in permanent set, and more excellent in rubber elasticity.

On the other hand, in the aqueous emulsions using the hydrogenated product of styrene-(isoprene/butadiene) copolymer having a peak top molecular weight of 260,000 as in Comparative Example 6 and the composition composed of the hydrogenated product of styrene-(isoprene/butadiene) copolymer having a peak top molecular weight of 260,000 and the softening agent as in Comparative Example 9, the block copolymer is not thoroughly dispersed, and the good aqueous emulsion and thin molded article cannot be obtained. In addition, in the case of using the block copolymer whose mass ratio of the styrene-derived polymer block to the farnesene-derived polymer block falls outside the scope of the present invention as in Comparative Example 7, the flexibility and rubber elasticity of the resulting thin molded article are deteriorated.

## Claims

1. An aqueous emulsion comprising a block copolymer (I) containing a polymer block (a) composed of a structural unit derived from an aromatic vinyl compound and a polymer block (b) containing 1 to 100% by mass of a structural unit (b1) derived from farnesene and 99 to 0% by mass of a structural unit (b2) derived from a conjugated diene other than farnesene, with a mass ratio [(a)/(b)] of the polymer block (a) and the polymer block (b) being 5/95 to 70/30; a protective colloid (II); and water, a content of the protective colloid (II) being 3 to 35 parts by mass based on 100 parts by mass of the block copolymer (I).

2. The aqueous emulsion according to claim 1, further comprising a softening agent (III), a content of the softening agent (III) being 0.5 to 150 parts by mass based on 100 parts by mass of the block copolymer (I).

3. The aqueous emulsion according to claim 1 or 2, wherein a peak top molecular weight (Mp) of the block copolymer (I) as determined by gel permeation chromatography in terms of polystyrene as a reference standard substance is 4,000 to 500,000.

4. The aqueous emulsion according to any of claims 1 to 3, wherein the aromatic vinyl compound is styrene.

5. The aqueous emulsion according to any of claims 1 to 4, wherein the farnesene is β-farnesene.

6. The aqueous emulsion according to any of claims 1 to 5, wherein the conjugated diene other than farnesene is at least one selected from isoprene, butadiene, and myrcene.

7. The aqueous emulsion according to any of claims 1 to 6, wherein a molecular weight distribution (Mw/Mn) of the

block copolymer (I) is 1 to 4.

8. The aqueous emulsion according to any of claims 1 to 7, wherein the block copolymer (I) is a hydrogenated block copolymer having a hydrogenation rate of carbon-carbon double bonds in the polymer block (b) of 70 mol% or more.

9. The aqueous emulsion according to any of claims 1 to 8, wherein the protective colloid (II) is at least one selected from polyvinyl alcohol, a modified polyvinyl alcohol, a water-soluble cellulose derivative, a water-soluble salt of a (meth)acrylic ester-unsaturated carboxylic acid copolymer, a styrene-maleic anhydride copolymer salt, a maleinized polybutadiene salt, a naphthalenesulfonate salt, and a polyacrylate salt.

10. The aqueous emulsion according to claim 9, wherein the protective colloid (II) is polyvinyl alcohol or a water-soluble salt of a (meth)acrylic ester-unsaturated carboxylic acid copolymer.

11. A thin molded article obtained from the aqueous emulsion according to any of claims 1 to 10.

12. A method for producing a thin molded article, which comprises a step of coating a substrate with the aqueous emulsion according to any of claims 1 to 10 to form a coating film; and a step of drying the coating film.

13. A method for producing a thin molded article, which comprises a step of impregnating a body to be impregnated with the aqueous emulsion according to any of claims 1 to 10 to obtain an impregnated body; and a step of drying the impregnated body.

## Patentansprüche

1. Wässrige Emulsion, umfassend ein Blockcopolymer (I), enthaltend einen Polymerblock (a), aufgebaut aus einer Struktureinheit, abgeleitet von einer aromatischen Vinylverbindung, und einen Polymerblock (b), enthaltend 1 bis 100 Masse-% einer Struktureinheit (b1), abgeleitet von Farnesenen, und 99 bis 0 Masse-% einer Struktureinheit (b2), abgeleitet von einem konjugierten Dien, verschieden von Farnesenen, mit einem Masseverhältnis [(a)/[(b)] des Polymerblocks (a) und des Polymerblocks (b) von 5/95 bis 70/30, ein Schutzkolloid (II), und Wasser, wobei ein Anteil des Schutzkolloids (II) 3 bis 35 Masse-Teile, bezogen auf 100 Masse-Teile des Blockcopolymers (I), beträgt.

2. Wässrige Emulsion gemäß Anspruch 1, weiter umfassend ein Erweichungsmittel (III), wobei ein Anteil des Erweichungsmittels (III) von 0,5 bis 150 Masse-Teile, bezogen auf 100 Masse-Teile des Blockcopolymers (I), beträgt.

3. Wässrige Emulsion gemäß Anspruch 1 oder 2, wobei ein Spitzenmolekulargewicht (Mp) des Blockcopolymers (I), bestimmt durch Gelpermeationschromatographie in Bezug auf Polystyrol als eine Referenzstandardsubstanz, 4000 bis 500 000 beträgt.

4. Wässrige Emulsion gemäß einem der Ansprüche 1 bis 3, wobei die aromatische Vinylverbindung Styrol ist.

5. Wässrige Emulsion gemäß einem der Ansprüche 1 bis 4, wobei das Farnesen β-Farnesen ist.

6. Wässrige Emulsion gemäß einem der Ansprüche 1 bis 5, wobei das konjugierte Dien, verschieden von Farnesenen, mindestens eines ist, ausgewählt aus Isopren, Butadien und Myrcen.

7. Wässrige Emulsion gemäß einem der Ansprüche 1 bis 6, wobei eine Molekulargewichtsverteilung (Mw/Mn) des Blockcopolymers (I) 1 bis 4 beträgt.

8. Wässrige Emulsion gemäß einem der Ansprüche 1 bis 7, wobei das Blockcopolymer (I) ein hydriertes Blockcopolymer mit einer Hydrierungsrate der Kohlenstoff-Kohlenstoff-Doppelbindungen in dem Polymerblock (b) 70 Mol% oder mehr beträgt.

9. Wässrige Emulsion gemäß einem der Ansprüche 1 bis 8, wobei das Schutzkolloid (II) mindestens eines ist, ausgewählt aus Polyvinylalkohol, einem modifizierten Polyvinylalkohol, einem wasserlöslichen Cellulosederivat, einem wasserlöslichen Salz eines (Meth)acrylsäureester-ungesättigte Carbonsäure-Copolymers, einem Styrol-Maleinsäureanhydrid-Copolymersalz, einem maleinierten Polybutadiensalz, einem Naphthalinsulfonatsalz und einem Polyacrylatsalz.

10. Wässrige Emulsion gemäß Anspruch 9, wobei das Schutzkolloid (II) Polyvinylalkohol oder ein wasserlösliches Salz eines (Meth)acrylsäureesterungesättigte Carbonsäure-Copolymers ist.

11. Dünner Formgegenstand, erhalten aus der wässrigen Emulsion gemäß einem der Ansprüche 1 bis 10.

12. Verfahren zur Herstellung eines dünnen Formgegenstands, welches einen Schritt des Beschichtens eines Substrats mit der wässrigen Emulsion gemäß einem der Ansprüche 1 bis 10 unter Bildung eines Beschichtungsfilms und einen Schritt des Trocknens des Beschichtungsfilms umfaßt.

13. Verfahren zur Herstellung eines dünnen Formgegenstands, welches einen Schritt des Imprägnierens eines mit der wässrigen Emulsion gemäß einem der Ansprüche 1 bis 10 zu imprägnierenden Körpers unter Erhalten eines imprägnierten Körpers und einen Schritt des Trocknens des imprägnierten Körpers umfaßt.

**Revendications**

1. Emulsion aqueuse comprenant un copolymère à blocs (I) contenant un bloc de polymère (a) composé d'une unité structurelle dérivée d'un composé vinyle aromatique et un bloc de polymère (b) contenant 1 à 100 % en masse d'une unité structurelle (b1) dérivée du farnesène et 99 à 0 % en masse d'une unité structurelle (b2) dérivée d'un diène conjugué autre que le farnesène, avec un rapport massique [(a)/(b)] du bloc de polymère (a) et du bloc de polymère (b) qui est de 5/95 à 70/30 ; un colloïde protecteur (II) ; et de l'eau, une teneur en le colloïde protecteur (II) étant de 3 à 35 parties en masse basée sur 100 parties en masse du copolymère à blocs (I).

2. Emulsion aqueuse selon la revendication 1, comprenant en outre un agent plastifiant (III), une teneur en l'agent plastifiant (III) étant de 0,5 à 150 parties en masse basée sur 100 parties en masse du copolymère à blocs (I).

3. Emulsion aqueuse selon la revendication 1 ou 2, dans laquelle un poids moléculaire supérieur crête (Mp) du copolymère à blocs (I) tel que déterminé par chromatographie par perméation de gel en termes de polystyrène comme substance étalon de référence est de 4000 à 500 000.

4. Emulsion aqueuse selon l'une quelconque des revendications 1 à 3, dans laquelle le composé vinyle aromatique est le styrène.

5. Emulsion aqueuse selon l'une quelconque des revendications 1 à 4, dans laquelle le farnesène est le β-farnesène.

6. Emulsion aqueuse selon l'une quelconque des revendications 1 à 5, dans laquelle le diène conjugué autre que le farnesène est au moins un sélectionné parmi l'isoprène, le butadiène et le myrcène.

7. Emulsion aqueuse selon l'une quelconque des revendications 1 à 6, dans laquelle une distribution de poids moléculaire (Mw/Mn) du copolymère à blocs (I) est de 1 à 4.

8. Emulsion aqueuse selon l'une quelconque des revendications 1 à 7, dans laquelle le copolymère à blocs (I) est un copolymère à blocs hydrogéné ayant un taux d'hydrogénation de doubles liaisons carbone-carbone dans le bloc de polymère (b) de 70 % molaire ou plus.

9. Emulsion aqueuse selon l'une quelconque des revendications 1 à 8, dans laquelle le colloïde protecteur (II) est au moins un sélectionné parmi l'alcool polyvinylique, un alcool polyvinylique modifié, un dérivé de cellulose hydrosoluble, un sel hydrosoluble d'un copolymère d'ester (méth)acrylique-acide carboxylique insaturé, un sel de copolymère de styrène-anhydride maléique, un sel de polybutadiène maléinisé, un sel de naphtalènesulfonate et un sel de polyacrylate.

10. Emulsion aqueuse selon la revendication 9, dans laquelle le colloïde protecteur (II) est l'alcool polyvinylique ou un sel hydrosoluble d'un copolymère d'ester (méth)acrylique-acide carboxylique insaturé.

11. Article moulé fin obtenu à partir de l'émulsion aqueuse selon l'une quelconque des revendications 1 à 10.

12. Procédé de production d'un article moulé fin, qui comprend une étape d'enrobage d'un substrat avec l'émulsion aqueuse selon l'une quelconque des revendications 1 à 10 pour former un film d'enrobage ; et une étape de séchage

du film d'enrobage.

13. Procédé de production d'un article moulé fin, qui comprend une étape d'imprégnation d'un corps devant être imprégné avec l'émulsion aqueuse selon l'une quelconque des revendications 1 à 10 pour obtenir un corps imprégné ; et une étape de séchage du corps imprégné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8120025 A
- JP 2006316211 A
- JP 2012502135 A
- JP 2012502136 A
- JP 2011132298 A